# EUROPEAN PATENT SPECIFICATION

(11) **EP 0 868 003 B1**
(45) Date of publication and mention of the grant of the patent: **27.02.2008**
(21) Application number: 98104460.5
(22) Date of filing: 12.03.1998
(51) Int. Cl.: H02J 3/36

(54) **A plant for transmitting electric power**
Anlage zur elektrischen Kraftübertragung
Installation de transmission d'énergie électrique

(30) Priority: 24.03.1997 SE 9701067
(43) Date of publication of application: 30.09.1998
(73) Proprietor: ABB AB, 721 83 Västerås (SE)
(72) Inventor: Eriksson, Kjell, 771 42 Ludvika (SE); Lindberg, Johan, 771 32 Ludvika (SE)

(56) References cited:
- WO-A-95/22848
- WO-A-97/02639
- SE-B- 464 843
- ANDERS LINDBERG,"PMW and control of two and three level high power voltage source convertes", 1995, ROYAL INSTITUTE OF TECHNOLOGY, (STOCKHOLM), page 1 - page 3, XP002900131

## Description

### FIELD OF THE INVENTION AND PRIOR ART

The present invention relates to a plant for transmitting electric power according to the preamble of appended claim 1.

Electric motors arranged on such locations, i.e. on an offshore-platform, on an island or in connection with a mine, have so far been provided with electric power through a plant for transmitting electric power having a local network in the form of an alternating voltage network with a generation of its own, on said location. This is especially due to the varying requirements of active and reactive power current during start and continued operation of such electric motors. This has meant a requirement of a presence of costly diesel engine, gas turbine or the like for driving this local network. Another disadvantage of having such a local network on such locations is that it is for different reasons complicated and associated with high costs to arrange such local networks on these locations.

Another plant has recently been known through the thesis "PWM and control of two and three level high power voltage source converters" by Anders Lindberg, Kungliga Tekniska Högskolan, Stockholm, 1995, in which publication such a plant for transmitting electric power through a direct voltage network for High Voltage Direct Current (HVDC) is described. Before the issuance of said thesis plants for transmitting electric power through a direct voltage network for High Voltage Direct Current have been based upon the use of line-commutated CSC (Current Source Converter) converters in stations for power transmission. By the development of IGBTs (Insulated Gate Bipolar Transistor = bipolar transistor having an insulated gate) for high voltage applications and the suitability to connect them in series in valves in converters, since they may easily be turned on and turned off simultaneously, VSC (Voltage Source Converter) converters for forced commutation have now instead become an alternative, and this type of transmission of electric power between a direct voltage network for High Voltage Direct Current being voltage-stiff therethrough and alternating voltage networks connected thereto offers several important advantages with respect to the use of line-commutated CSCs in HVDC, and it is a desire to find fields of use for this totally new type of plant, which is so far only theoretically described in the thesis mentioned above, which utilizes the particular advantages offered by such a plant with respect to other plants previously known for transmitting electric power.

### SUMMARY OF THE INVENTION

The object of the present invention is to provide a plant of the type defined in the introduction reducing the problems with such plants already known.

This object is according to the invention obtained by providing a plant according to the appended claim 1.

By the understanding that it is in this type of plant possible to supply a network without any generation of its own (a dead alternating voltage network), and that this feature may advantageously be combined with the possibility in such a plant to control the flow of active and reactive power independently of each other, it was possible to provide a plant, which means a totally new field of use for transmitting electric power in a direct voltage network for High Voltage Direct Current and which solves important problems which constructions previously known within this field of use have been wrestling with. When High Voltage Direct Current is used for the supply to an alternating voltage network having line-commutated CSCs it has, as stated, been necessary that the alternating voltage network has been provided with a generation of its own, which for instance in the case of feeding electric motors on an off-shore platform means a requirement of having a local network on the platform. This means in its turn a requirement of a presence of any costly diesel engine or the like for driving this local network. By utilizing a plant according to the invention in such a case it will be possible to manage without any such local network having a generation of its own and such a diesel engine, gas turbine or the like therefor. Furthermore, the possibility to regulate active and reactive power separately means that the plant can be driven like a SVC (Static Var Controller), which is an important advantage in power transmission to an electric motor, since when this is started the reactive power flow thereto dominates strongly, but after that the active power demanded by the load will dominate.

Such a plant is also advantageous, since it avoids a utilization of a local network generating electric power for electric motors located on electrically seen distant places, where it for different reasons would be complicated and associated with high costs to arrange such local networks.

WO 95/22848 A, SE 464 843 B and WO 97/02639 A only shows that it is already known to feed weak alternating voltage networks by a direct voltage network through a VSC converter, but they do not give any hint how to solve the problems associated with local networks on an offshore-platform, on an island or in connection with a mine, mentioned above.

According to a preferred embodiment of the invention the alternating voltage network connected to said first station is connected to at least an electric motor consuming comparatively high power, and the plant comprises members adapted to enable feeding of electric power from the direct voltage network to other loads in parallel with the feeding to said motor. It will by this be possible to utilize the plant also for driving other electric equipment than motors, so that for example in the case of off-shore platforms both motors present there may be driven and for the rest electric power may be provided on the platform through the plant.

According to another preferred embodiment of the invention which constitutes a further development of the embodiment last mentioned, the plant comprises means adapted to disconnect said other loads fed in parallel from the energy supply from the direct voltage network during start of said motor. Other parts of the plant with other loads are by this not disturbed during the extreme conditions with a strong current surge often prevailing during the start of a large motor.

According to another preferred embodiment of the invention said members comprise at least one second VSC converter connected to the direct voltage network and adapted to deliver electric power to other loads than said electric motor consuming comparatively high power. Other loads may by this be fed in parallel with the feeding to said motor through the plant with the possibility to reduce the influence of this feeding by a start of said motor.

According to another preferred embodiment of the invention it is at least an asynchronous motor that is connected to the alternating voltage network connected to said first station. Such a motor requires a very high current during the start during a period of time in the order of 20-30 seconds as a consequence of the existing slip, and the advantage of being able to separately regulate the transmission of active and reactive power to said alternating voltage network is particularly great when feeding such a motor.

Further advantages as well as advantageous features of the invention will appear from the following description and the other dependent claims.

### BRIEF DESCRIPTION OF THE DRAWING

With reference to the appended drawing, below follows a description of preferred embodiments of the invention cited as examples.

In the drawing:
- Fig 1: is a very schematic diagram illustrating the basic features of a plant according to a first preferred embodiment of the invention, and
- Fig 2: is a view corresponding to Fig 1 of a plant according to a second preferred embodiment of the invention.

### DETAILED DESCRIPTION OF PREFERRED EMBODIMENTS OF THE INVENTION

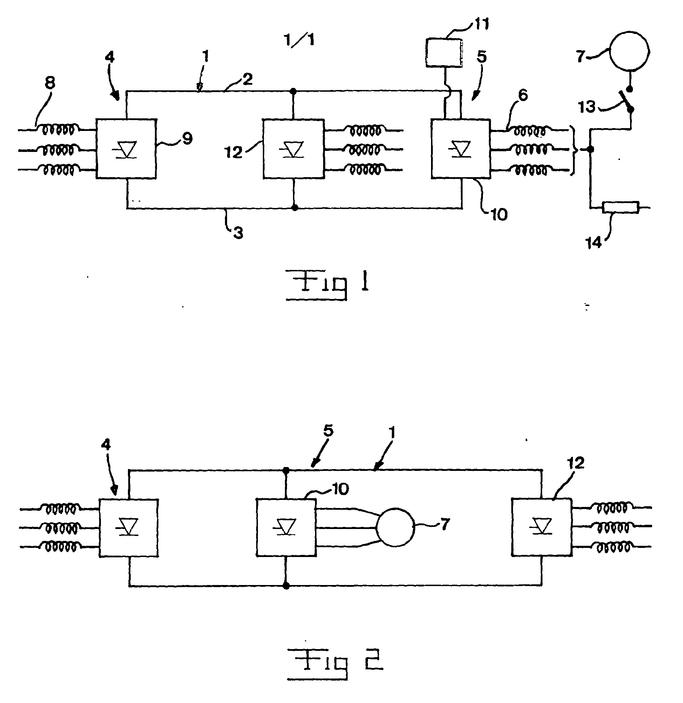

The construction of a plant for transmitting electric power according to the invention is very schematically and simplified illustrated in Fig 1, in which only the different components having directly something to do with the function according to the invention has been shown in the drawings for facilitating the comprehension of the invention. The plant comprises a direct voltage network 1 for High Voltage Direct Current (HVDC = High Voltage Direct Current) having two pole conductors 2, 3 and stations 4, 5 arranged therealong for transmitting electric power between the direct voltage network and an alternating voltage network connected to the respective station. An alternating voltage network 6 connected to a first 5 of the stations is intended to be a so-called dead network without any generation of its own and is connected to an electric motor 7, such as an asynchronous motor, or a plurality of such motors, which has the ability to consume comparatively high power. An alternating voltage network 8, which has generators of electric power for feeding thereof in towards the direct voltage network, is connected to the second station 4. The respective station comprises at least one VSC converter 9, 10 adapted to convert direct voltage into alternating voltage and conversely. However, it is possible that the respective station comprises a plurality of such converters, but these are in the present case summarized through one single box. The VSC converter comprises in a conventional way so-called current valves, which consist of branches of breakers of turn-on and turn-off type connected in series, preferably in the form of IGBTs, and diodes connected in anti-parallel therewith. A great number of IGBTs may be connected in series in one single valve so as to be turned on and turned off simultaneously so as to function as one single breaker, wherethrough the voltage across the valve is distributed among the different breakers connected in series. The control of the breakers is performed by pulse width modulation (PWM). The stations further comprise an apparatus 11 schematically indicated for controlling the respective converter so as to cause said modulation (such an apparatus is only shown for the first station 5, but such are there for all the stations of the plant).

It is also the intention that the distance between the stations 4 and 5 is comparatively long for being in connection with electric power transmission, so that the station 5 is located on an electrically remote place, such as for example an off-shore platform, at a mine or on islands, where separate networks are required. The distance between the stations may be comparatively short in kilometres but nevertheless electrically long through the very localization.

Furthermore, the plant can have and has here an additional VSC converter 12 connected to the direct voltage network and adapted to deliver electric power to other loads than said motors in parallel with the feeding thereof, in which it is possible that this converter is arranged in connection to the station 5. It is intended that the motor 7 may through one breaker 13 be separated from the converter when it is not in operation and feeding may then take place to a load 14 connected in parallel with the motor. Thanks to the nature of a VSC converter active and reactive power supplied to the motor 7 may be separately controlled through the apparatus 11 by suitable control pulses to the converter, so that a powerful reactive power current may be generated on start and then transmission of active power may dominate. Thus, the apparatus 11 may control the converter in the first station as an SVC by giving reactive power order adapted for this purpose thereto.

The plant according to the embodiment illustrated in Fig 2 differs from that according to Fig 1 only by the fact that the converter 10 of the first station 5 is connected to only the motor 7 for separate operation thereof without any loads connected to the converter.

The invention is of course not in any way restricted to the preferred embodiments described above, but several possibilities to modifications thereof would be apparent to a man skilled in the art without departing from the basic idea of the invention as defined by the claims.

The number of stations, the number of loads connected in parallel and the like may for example be varied arbitrarily. An additional converter connected in parallel with the converter to which the motor is connected is shown in the figures, but the plant could be without such a converter connected in parallel or have more than one thereof.

It is pointed out that the patent claim definition "alternating voltage network" is to be given a wide meaning, and also a shorter connection line between a motor and a converter for transmitting alternating voltage without being any "network" in the traditional meaning thereof is comprised.

## Claims

1. A plant for transmitting electric power to one or more electric motors arranged at a distance being long for an electric power transmitting application to an electric power generating alternating voltage network by being arranged on an offshore-platform, on an island or in connection with a mine, **characterized in that** it comprises a direct voltage network (1) for High Voltage Direct Current (HVDC) extending over said distance and at least one alternating voltage network (6) connected thereto through a first station (5) and being a network without any generation of its own, that said station is adapted to perform transmitting of electric power between the direct voltage network and the alternating voltage network last mentioned and comprises at least one VSC converter (10) adapted to convert direct voltage into alternating voltage and conversely and an apparatus (11) for controlling the converter, that a large part of a load connected to the alternating voltage network being without any generation of its own consists of said electric motor/motors, that the plant further comprises at least one additional station (4) connected to the direct voltage network (1) with an additional alternating voltage network (8) connected thereto, and that said additional alternating voltage network is an alternating voltage network generating electric power.

2. A plant according to claim 1, **characterized in that** the alternating voltage network (6) connected to said first station (5) is connected to at least one electric motor (7) consuming a comparatively high power, and that the plant comprises members (12) adapted to enable feeding of electric power from the direct voltage network to other loads in parallel with the feeding to said motor.

3. A plant according to claim 2, **characterized in that** it comprises means (13) adapted to disconnect said other loads fed in parallel from the energy supply from the direct voltage network (1) during start of said motor (7).

4. A plant according to any of claims 1-3, **characterized in that** said converter (10) of the first station (5) is fixedly connected to at least one electric motor (7) consuming a comparatively high power.

5. A plant according to claim 2, **characterized in that** said members comprise at least one second VSC converter (12) connected to the direct voltage network (1) and adapted to deliver electric power to other loads than said electric motor (7) consuming a comparatively high power.

6. A plant according to any of claims 1-5, **characterized in that** it is at least one asynchronous motor (7) that is connected to the alternating voltage network (6) connected to said first station (5).

7. A plant according to any of claims 1-6, **characterized in that** said apparatus (11) is adapted to control the VSC converter (10) of the first station (5) as a SVC by giving reactive power orders thereto balanced for this purpose.

## Patentansprüche

1. Anlage zum Übertragen von elektrischem Strom zu einem oder mehreren elektrischen Motoren, die einer Entfernung angeordnet sind, die groß für eine Übertragungsapplikation für elektrischen Strom ist, an eine ein elektrischen-Stromerzeugendes Wechselspannungsnetzwerk, das auf einer Hochsee-Plattform, auf einer Insel oder in Verbindung mit einer Mine angeordnet ist, **dadurch gekennzeichnet, dass** sie ein Gleichspannungsnetzwerk (1) für Hochspannungs-Gleichstrom (HVDC) umfasst, das sich über die Entfernung erstreckt und mindestens ein Wechselspannungsnetzwerk (6), das damit durch eine erste Station (5) verbunden ist und ein Netzwerk ist, ohne eigene Erzeugung, dass die Station eingerichtet ist, die Übertragung von elektrischem Strom zwischen dem Gleichspannungsnetzwerk und dem zuletzt erwähnten Wechselspannungsnetzwerk durchzuführen und mindestens ein VSC-Wandler (10), der eingerichtet ist Gleichspannung in Wechselspannung und umgekehrt zu wandeln und eine Vorrichtung (11) zum Steuern des Wandlers umfasst, dass ein großer Teil einer Last, die mit dem Wechselspannungsnetzwerk verbunden ist, ohne eigene Erzeugung aus dem elektrischen Motor/den elektrischen Motoren besteht, dass die Anlage weiter mindestens eine zusätzliche Station (4) umfasst, die mit dem Gleichspannungsnetzwerk (1) verbunden ist, mit einem zusätzlichen Wechselspannungsnetzwerk (8), das damit verbunden ist, und dass das zusätzliche Wechselspannungsnetzwerk ein Wechselspannungsnetzwerk ist, das elektrischen Strom erzeugt.

2. Anlage nach Anspruch 1, **dadurch gekennzeichnet, dass** das Wechselspannungsnetzwerk (6), das mit der ersten Station (5) verbunden ist, mit mindestens einem elektrischen Motor (7) verbunden ist, der eine vergleichsweise hohe Leistung verbraucht und dass die Anlage Elemente (12) umfasst, die eingerichtet sind, die Zufuhr von elektrischem Strom von dem Gleichspannungsnetzwerk zu anderen Lasten parallel zu der Zufuhr zu dem Motor zu ermöglichen.

3. Anlage nach Anspruch 2, **dadurch gekennzeichnet, dass** sie Mittel (13) umfasst, die eingerichtet sind, die anderen Lasten, während des Starts des Motors (7), zu trennen, die parallel von der Energieversorgung von dem Gleichspannungsnetzwerk (1) gespeist werden.

4. Anlage nach einem der Ansprüche 1-3, **dadurch gekennzeichnet, dass** der Wandler (10) der ersten Station (5) fest mit mindestens einem elektrischen Motor (7) verbunden ist, der eine vergleichsweise hohe Leistung verbraucht.

5. Anlage nach Anspruch 2, **dadurch gekennzeichnet, dass** die Elemente mindestens einen zweiten VSC-Wandler (12) umfassen, der mit dem Gleichspannungsnetzwerk (1) verbunden ist und eingerichtet ist elektrischen Strom zu anderen Lasten als dem elektrischen Motor (7) zuführen, der eine vergleichsweise hohe Leistung verbraucht.

6. Anlage nach einem der Ansprüche 1-5, **dadurch gekennzeichnet, dass** es mindestens ein asynchroner Motor (7) ist, der mit dem Wechselspannungsnetzwerk (8) verbunden ist, das mit der ersten Station verbunden ist.

7. Anlage nach einem der Ansprüche 1-6, **dadurch gekennzeichnet, dass** die Vorrichtung (11) eingerichtet ist, den VSC-Wandler (10) der ersten Station (5) als ein SVC zu steuern, durch Geben von für diesen Zweck abgestimmten Blindleistungs-Anweisung an diese.

## Revendications

1. Installation de transmission d'énergie électrique vers un ou plusieurs moteurs électriques placés à une distance relativement longue pour une application de transmission d'énergie électrique à un réseau à tension alternative produisant de l'énergie électrique en étant placés sur une plate-forme offshore, sur une île ou en connexion avec une mine, **caractérisée en ce qu'**elle comprend un réseau à tension continue (1) pour du courant continu à haute tension (HVDC) s'étendant sur ladite distance et au moins un réseau à tension alternative (6) connecté à celui-ci via une première station (5) et qui est un réseau sans aucune production propre, **en ce que** ladite station est adaptée pour effectuer la transmission d'énergie électrique entre le réseau à tension continue et le réseau à tension alternative mentionné en dernier et comprend au moins un convertisseur VSC (10) adapté pour convertir une tension continue en une tension alternative et inversement et un dispositif (11) pour commander le convertisseur, **en ce qu'**une grande partie d'une charge connectée au réseau à tension alternative sans aucune production propre est constituée par ledit/lesdits moteur(s) électrique(s), **en ce que** l'installation comprend en outre au moins une station supplémentaire (4) connectée au réseau à tension continue (1) avec un réseau à tension alternative supplémentaire (8) connecté à celle-ci, et **en ce que** ledit réseau à tension alternative supplémentaire est un réseau à tension alternative produisant de l'énergie électrique.

2. Installation selon la revendication 1, **caractérisée en ce que** le réseau à tension alternative (6) connecté à ladite première station (5) est connecté à au moins un moteur électrique (7) consommant une puissance relativement élevée, et **en ce que** l'installation comprends des éléments (12) adaptés pour permettre la fourniture d'énergie électrique du réseau à tension continue à d'autres charges en parallèle avec l'alimentation dudit moteur.

3. Installation selon la revendication 2, **caractérisée en ce qu'**elle comprend un moyen (13) adapté pour déconnecter lesdites autres charges alimentées en parallèle de l'alimentation en énergie provenant du réseau à tension continue (1) pendant le démarrage dudit moteur (7).

4. Installation selon l'une quelconque des revendications 1 à 3, **caractérisée en ce que** ledit convertisseur (10) de la première station (5) est connecté de manière fixe à au moins un moteur électrique (7) consommant une puissance relativement élevée.

5. Installation selon la revendication 2, **caractérisée en ce que** lesdits éléments comprennent au moins un deuxième convertisseur VSC (12) connecté au réseau à tension continue (1) et adapté pour délivrer de l'énergie électrique aux charges autres que ledit moteur électrique (7) consommant une puissance relativement élevée.

6. Installation selon l'une quelconque des revendications 1 à 5, **caractérisée en ce que** c'est au moins un moteur asynchrone (7) qui est connecté au réseau à tension alternative (6) connecté à ladite première station (5).

7. Installation selon l'une quelconque des revendications 1 à 6, **caractérisée en ce que** ledit dispositif (11) est adapté pour commander le convertisseur VSC (10) de la première station (5) en tant que SVC en donnant des ordres de puissance réactive à celui-ci équilibrés dans ce but.
